# EUROPEAN PATENT APPLICATION

(11) **EP 3 276 131 A1**
(43) Date of publication of application: **31.01.2018**
(21) Application number: 17178386.3
(22) Date of filing: 28.06.2017
(51) Int. Cl.: F01D 21/00, G01N 21/88, G01N 21/954

(54) **SYSTEMS AND METHODS FOR INDEXING AND DETECTING COMPONENTS**

(30) Priority: 28.07.2016 US 201615222548
(71) Applicant: United Technologies Corporation, Farmington, CT 06032 (US)
(72) Inventor: FINN, Alan Matthew, Hebron, CT 06248 (US); FOLEY, Michael G., Hebron, CT 06248 (US)
(74) Representative: Power, Philippa Louise

(57) **Abstract**

Systems and methods for defect detection and position control are described herein. A method of performing position control on members in a device may comprise applying, by a deposition device (40; 340), a fiducial mark to a first member of the device, and receiving, by a processing unit (14), from an image capture device (10; 310) coupled to the processing unit (14), an image (434) of the first member. In various embodiments, the method may further comprise detecting, by the processing unit (14), the fiducial mark on the first member. In various embodiments, the fiducial mark may comprise ink.

## Description

### FIELD

This disclosure relates generally to position control used with automated defect inspection for gas turbine engines.

### BACKGROUND

Video inspection systems, such as borescopes, have been widely used for capturing images or videos of difficult to-reach locations by "snaking" image sensor(s) to such locations. Applications utilizing borescope inspections include aircraft engine blade inspection, power turbine blade inspection, internal inspection of mechanical devices, and the like.

A variety of techniques for inspecting the images or videos provided by borescopes for determining defects therein have been proposed in the past. Most such techniques capture and display images or videos to human inspectors for defect detection and interpretation. Human inspectors then decide whether any defect within those images or videos exists.

Once defects are detected in a member of a device, the member must typically be manually located within the device and reinspected to confirm the presence and extent of the defect identified in the images or video. Identifying and locating the defective member within the device may be time consuming and difficult because of the size of the device, the quantity of members within the device that may need to be inspected, the location of the defective member within the device, and, in some cases, the similarity of each member to one another.

### SUMMARY

Systems and methods for position control are described herein, in accordance with various embodiments. A method of performing position control on members of a device, the method comprising applying, by a deposition device, a fiducial mark to a first member of the device, and receiving, by a processing unit, from an image capture device coupled to the processing unit, an image of the first member.

In various embodiments, the method may further comprise detecting, by the processing unit, the fiducial mark on the first member. The method may further comprise transmitting, by the processing unit, instructions to a turning tool to move the first member to an inspection position in the device. The method may further comprise detecting, by the processing unit, a defect in a second member. The method may further comprise transmitting, by the processing unit, instructions to a turning tool to move the second member to an inspection position in the device. The applying the fiducial mark may be in response to the detecting the defect. The applying may be performed via the deposition device, the deposition device being coupled near a tip of the image capture device. The method may further comprise selecting, by the processing unit, the first member to be a reference member, wherein the selecting is in response to the detecting the fiducial mark. The method may further comprise indexing a location of the second member relative to the first member. The device may comprise an aircraft engine. The first member may comprise a blade.

A defect detection and position control system may comprise a processing unit, a deposition device in communication with the processing unit, the deposition device configured to deposit a fiducial mark onto a member of a device, and an image capture device in communication with the processing unit, the image capture device configured to send an image of the member to the processing unit.

In various embodiments, the deposition device may be attached to the image capture device. The depositing the fiducial mark and the sending the image may be simultaneous. The processing unit may be configured to detect the fiducial mark. The deposition device may be configured to deposit the fiducial mark onto the member in response to the processing unit detecting a defect on the member. The processing unit may include a non-transitory computer readable medium having instructions stored thereon that, in response to execution by the processing unit, cause the processing unit to perform operations comprising receiving, by the processing unit, from the image capture device a first image of a first member of the device, receiving, by the processing unit, from the image capture device a second image of a second member of the device, detecting, by the processing unit, a first defect in the first member, detecting, by the processing unit, a second defect in the second member, the second member being in sequence with the first member, determining, by the processing unit, that the second defect is indistinguishable from the first defect, and selecting, by the processing unit, a sequence of reference members comprising at least the first member and the second member. The member may comprise a blade. The device may comprise an aircraft engine.

A method of performing position control may comprise receiving, by a processing unit, from an image capture device in electronic communication with the processing unit, an image of a first member inside of a device, receiving, by the processing unit, from the image capture device an image of a second member inside of the device, detecting, by the processing unit, a first defect in the first member, detecting, by the processing unit, a second defect in the second member, determining, by the processing unit, that the second defect is indistinguishable from the first defect, and selecting, by the processing unit, a sequence of reference members comprising at least the first member and the second member.

In various embodiments, the method may further comprise indexing a location of each of a plurality of members within the device relative to the sequence of reference members. The method may further comprise detecting, by the processing unit, a defect in a third member of the plurality of members. The plurality of members may comprise a plurality of blades and the device may comprise an aircraft engine.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

Figure 1 illustrates a schematic view of a defect detection and position control system, in accordance with various embodiments;
Figures 2A and 2B illustrate flowcharts of exemplary steps of position control methods used in conjunction with automated defect detection, in accordance with various embodiments;
Figure 3 illustrates the image detection device and the deposition device of FIG. 1 being located in an inspection port of an aircraft engine, in accordance with various embodiments;
Figure 4 illustrates an exemplary set of images received by the processing unit of FIG. 1, in accordance with various embodiments; and
Figure 5 illustrates a method of performing position control including sub steps of the exemplary steps of FIG. 2A and FIG. 2B.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein. Thus, the detailed description herein is presented for purposes of illustration only and not of limitation. The scope of the disclosure is defined by the appended claims. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials. In some cases, reference coordinates may be specific to each figure.

Gas turbine engines include various stages which include blades, some or all of which may benefit from visual inspection periodically. Such blades may be accessible during the inspection process by a relatively small inspection port. Thus, inspection is typically performed via an image capture device. The image capture device may provide a set of images of the blades which may be inspected by an automated defect detection and position control system. Indexing of the blades is especially useful so that a blade of interest may be rotated to the inspection port for visual inspection. The automated defect detection and position control system, as described herein, includes a deposition device capable of making a fiducial mark on the blades to create one or more reference blades. Such reference blades may be used during the indexing process. Fiducial marks may allow for the automated defect detection and position control system to repeatedly and accurately detect the reference blade.

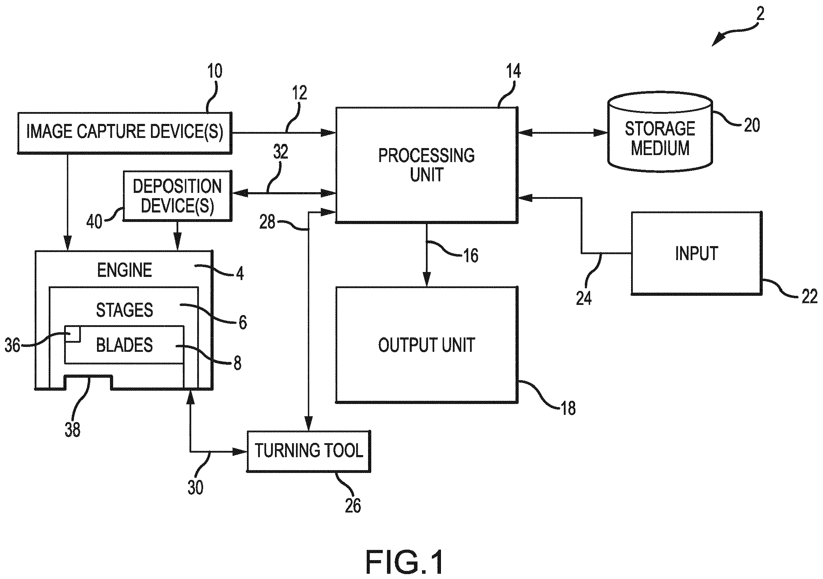

With reference to FIG. 1, a schematic illustration of a defect detection and position control system (system) 2 is shown, in accordance with various embodiments. The defect detection system may include a processing unit 14, an image capture device 10, and a deposition device 40. An engine 4 may have a plurality of stages 6, each of the stages having a plurality of airfoils such as stationary airfoils (also referred to as vanes) or such as rotating airfoils (also referred to as blades) which are shown as blades 8, some or all of which may benefit from visual inspection periodically or at predetermined intervals by an image capture device 10. In this regard, blades 8 may comprise members of engine 4. Furthermore, engine 4 may be referred to herein as a device. In various embodiments, the image capture device 10 may be one or more borescopes. The engine 4 may be representative of a wide variety of engines, such as, jet aircraft engines, aeroderivative industrial gas turbines, steam turbines, diesel engines, automotive and truck engines, and the like. Notwithstanding that the present disclosure has been described in relation to visual inspection of the blades 8 of an engine 4, in other embodiments, the system 2 may be employed to inspect other parts of the engine 4, as well as to perform inspection on the parts or members of other types of equipment and devices. Such parts/members are not limited to airfoils such as blades. For example, the system 2 may be used for medical endoscopes, or inspecting interior surfaces in machined or cast parts, and the like.

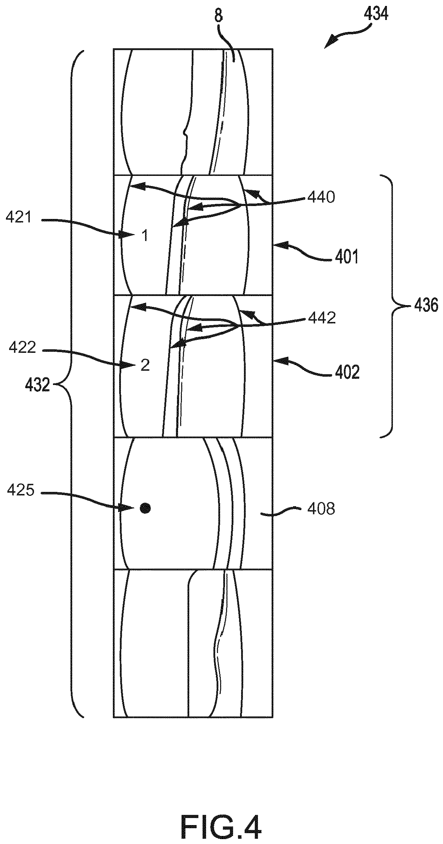

With combined reference to FIG. 1 and FIG. 4, the image capture device 10 may be an optical device having an optical lens or other imaging device or image sensor and capable of capturing and transmitting images 434 through a communication channel 12 to a processing unit 14. The image capture device 10 may be representative of any of a variety of flexible borescopes or fiberscopes, rigid borescopes, video borescopes or other devices, such as, endoscopes, which are capable of capturing and transmitting images 434 of difficult-to-reach areas through the communication channel 12. The communication channel 12 in turn may be an optical channel or may be any other wired, wireless, or radio channel or any other type of channel capable of transmitting images 434 between two points, including a packet-switched network such as one using Transmission Control Protocol/Internet Protocol (TCP/IP).

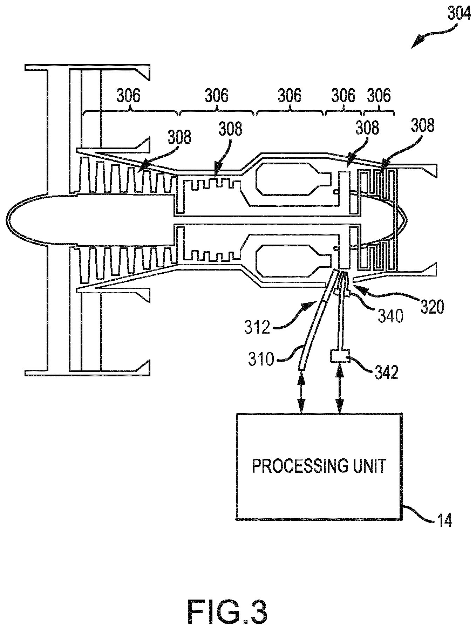

Deposition device 40 may comprise any device capable of depositing ink 342 (see FIG. 3) onto blades 8. For example, deposition device 40 may comprise a controllable inkjet print head. A fiducial mark may be deposited onto blades 8 via deposition device 40. A fiducial mark may comprise any unique and/or distinguishable mark capable of being detected by processing unit 14 via image capture device 10. For example, a fiducial mark may comprise a dot, line, circle, square, polygon, numerical values, Roman numerals, alphabetical characters, or any other distinguishable marks. Ink 342 (see FIG. 3) deposited by deposition device 40 may comprise a high temperature resistant marking agent. Ink 342 (see FIG. 3) deposited by deposition device 40 may be blue. Blue ink may be detectable by processing unit 14 via an excess-blue algorithm. In general, Ink 342 may comprise any subsequently detectable material, e.g., the ink may be visibly detectable as described, may contain infrared fluorescent constituents, radioactive tracers, and the like. Similarly, image capture device 10 may be additionally sensitive to non-human-visible portions of the electromagnetic spectrum, radiation, and the like. The deposition device 40 may be in communication with processing unit 14 via communication channel 32. Communication channel 32 may be similar to communication channel 12. Processing unit 14 may be capable of sending commands or otherwise controlling deposition device 40 via communication channel 32.

Processing unit 14 may be located on-site near or on the engine 4 or processing unit 14 may be located at a remote site away from the engine 4. The system 2 may include a storage medium 20. Storage medium 20 may be in communication with the processing unit 14. The storage medium 20 may store data and programs used in processing images 434 of the blades 8, and monitoring and controlling the position of the blade(s) 8 in the engine 4. The processing unit 14 may receive and process images 434 of the blades 8 that are captured and transmitted by the image capture device 10 via the communication channel 12. Upon receiving the images 434, the processing unit 14 may process the images 434 to perform feature extraction and image analysis and to determine whether there are defects within any of the blades 8. In various embodiments the defect detection may be automatic or may be semi-automated.

The system 2 may include an output unit 18. Results (e.g., the defects) may be transmitted through communication channel 16 and displayed or printed by the output unit 18. The output unit may be a visual display, a printer, auditory unit, or the like. In addition, the output unit 18 may be a combination of the aforementioned exemplary output units. For example in various embodiments, the output unit may comprise a visual display, an auditory unit, and a printer. The results may include information regarding whether any defects in any of the blades 8 were found. Information about the type of defect, the location of the defect, size of the defect, etc. may also be reported as part of the results. For example, the output unit 18 may display a map of the engine 4 or a portion of the engine 4 and may identify the location of a defective blade 8 on the map. In various embodiments, the output unit 18 may display directions to guide a user to locate a defective blade 8 in the engine 4. The directions may be in a step-by-step format. In various embodiments, the output unit 18 may provide auditory directions or signals to guide a user to locate a defective blade 8 in the engine 4.

Similar to the communication channel 12, the communication channel 16 may be any of variety of communication links including, wired channels, optical or wireless channels, radio channels, or using a packet-switched network such as TCP/IP. It will also be understood that although the output unit 18 has been shown as being a separate device from the processing unit 14, in various embodiments, output unit 18 and processing unit 14 are housed in the same device. Rather, in various embodiments, the output unit 18 may be part of the processing unit 14 and the results may be stored within and reported through the processing unit 14 as well. Furthermore, reporting of the results may involve storing the results in the storage medium 20 for future reference.

The system 2 may include an input unit 22 coupled to the processing unit 14. The input unit 22 may be a keyboard, touch screen, or any other input device as known in the art. The input unit 22 may be coupled to the processing unit 14 by communication channel 24. Similar to the communication channel 12, communication channel 24 may be any of variety of communication links including, wired channels, optical or wireless channels, radio channels, or using a packet-switched network such as TCP/IP.

The system 2 may also include a turning tool 26 coupled to the processing unit 14 by communication channel 28. The turning tool 26 may be coupled to the engine 4 by direct mechanical coupling 30 or other means causing the movement of blades 8. In various embodiments, the turning tool may be coupled to the engine stage 6. The turning tool 26 is configured to move the blades 8 of the engine 4 based on instructions provided to the turning tool 26 by the processing unit 14. In various embodiments, the turning tool 26 may be a motor configured to move a blade 8 of an engine stage 6 into an inspection position 38 based on instructions received from the processing unit 14. The inspection position 38 may, for example, be a port or appropriately sized opening in the engine 4 through which maintenance or other personnel may visually inspect the blade 8 directly or using a borescope. Similar to the communication channel 12, the communication channel 28 may be any of variety of communication links including, wired channels, optical or wireless channels, radio channels, or using a packet-switched network such as TCP/IP.

With reference to FIG. 3, an image capture device 310 and deposition device 340 being located in an inspection port 320 of an engine 304 is illustrated, in accordance with various embodiments. Image capture device 310 and deposition device 340 may be similar to image capture device 10 and deposition device 40 of FIG. 1, respectively. Engine 304 may comprise multiple stages 306 and may comprise blade(s) 308. Engine 304 may be similar to engine 4 of FIG. 1. Blade(s) 306 may be similar to blade(s) 6 of FIG. 1. With combined reference to FIG. 1 and FIG. 3, in various embodiments, deposition device 340 may be coupled to image capture device 310. For example, deposition device 340 may be coupled near a tip 312 of image capture device 310. Thus, image capture device 310 and deposition device 340 may be simultaneously inserted into an inspection port 320 of engine 304 for inspecting blade(s) 308. In this regard, image capture device 310 may send images of at least a portion of blade(s) 306 at the same time that deposition device 340 is depositing a fiducial mark. Coupling deposition device 340 to image capture device 310 may aide in automated deposition of ink 342 onto blade(s) 308. However, deposition device 340 may be a separated from image capture device 310, in accordance with various embodiments.

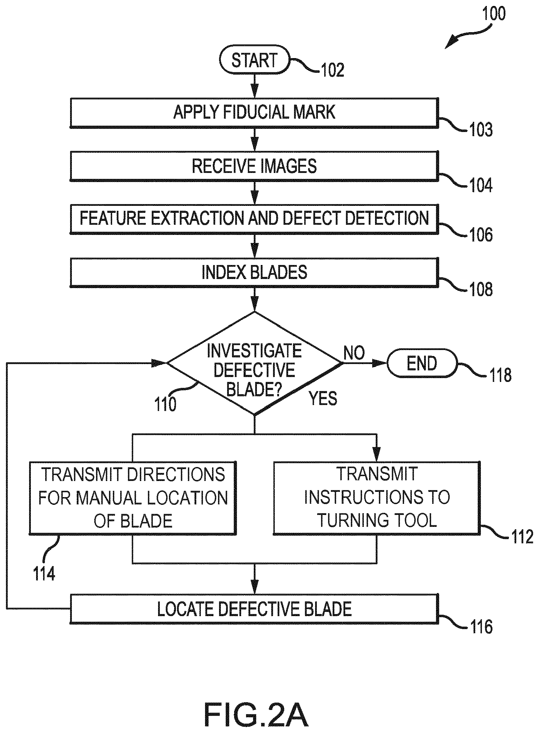

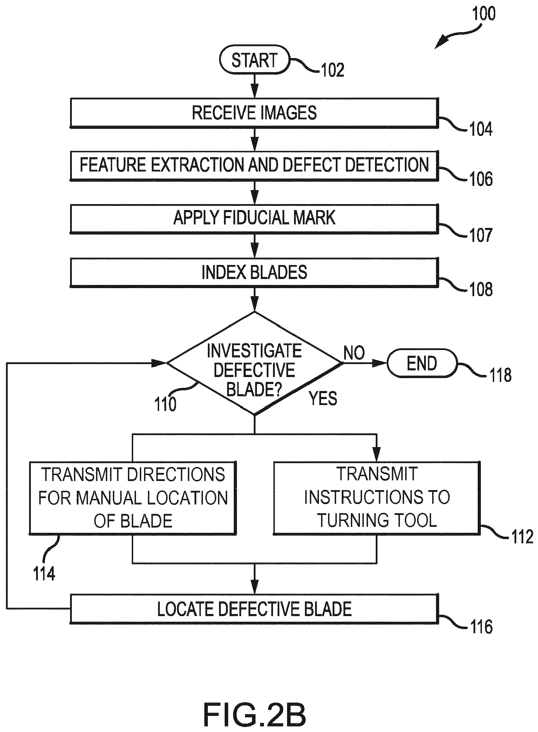

FIG. 2A and FIG. 2B are exemplary flowcharts 100 showing sample steps which may be followed in performing automated defect detection and position control using the system 2. In other words, FIG. 2A and FIG. 2B provide methods of performing position control on defective members in a device. In FIG. 2A, a fiducial mark is made before the images are received by the processing unit. In FIG. 2B, a fiducial mark is made after the images are received by the processing unit and have been evaluated for defect detection.

With combined reference to FIG. 1, FIG 2A, FIG. 2B, and FIG. 4, after starting at step 102, in various embodiments as illustrated in FIG. 2A, the process proceeds to step 103, in which a fiducial mark is applied via deposition device 40. The fiducial mark may be applied in an automated process or may be applied by human control. The fiducial mark may be used for indexing blades 8 via images 434. For example, the reference blade 36 may be the blade having the fiducial mark and the blades 8 may be indexed relative to the reference blade 36, in accordance with various embodiments. In various embodiments, applying a fiducial mark may provide an easily distinguishable mark for processing unit 14 to detect during the indexing process.

In various embodiments, as illustrated in FIG. 2B, the process proceeds to step 104, in which an initial set of images 434 of blades 8 of an engine 4 may be received by the processing unit 14 from the image capture device 10. The set 432 of images 434 may be sequential in terms of the order in which they are captured by the image capture device (e.g., image one followed by image two, etc.). In further embodiments, the images 434 may be non-sequential with regard to the order in which the images 434 were captured by the image capture device 10. For example, every third image captured by the image capture device 10 may be received by the processing unit 14.

The blades 8 may be rotating in the engine 4 at the time the images 434 are captured. For example, the blades 8 may rotate toward or away from the image capture device 10 when the images 434 are being captured. The images 434 captured may be of the same blade 8 in different positions in the field of view of the image capture device 10 and/or may be of a plurality of blades 8 in different positions in the field of view of the image capture device 10. Thus, there may be periodic or semi-periodic motion in the capturing of images 434 of such inspected engine blades 8.

In step 106 the processing unit 14 may extract the features from each blade 8 from the set 432 of images 434 and may detect defects in one or more blades 8 of the engine 4. Various techniques of feature extraction and defect detection may be utilized by the processing unit 14. For example, defects may be determined by comparing received image data from the image capture device 10 with a normal model of an undamaged blade 8. The normal model may be created or otherwise learned automatically from data transmitted by the image capture device 10, or the normal model may be received by input from a user.

In various embodiments, Robust Principal Component Analysis (RPCA) may be utilized to determine the normal model and/or detect defects. RPCA may be applied to the set 432 of images 434 to decompose the set 432 of images 434 received by the processing unit 14 from the image capture device 10 into a first series of low rank component images (low rank matrix) and a second series of sparse component anomaly images (sparse matrix). Typically blades 8 of an engine 4 are of the same size in a given engine stage 6. When a second blade 8 rotates to the same position as that which the first blade 8 had been in previously, the two images 434 taken at the two different instances are generally almost the same. The repetitive, nearly identical images 434 are captured in the low rank matrix and may be utilized to create a normal blade model. The damaged areas, for example nicks or dents, which tend to occupy a small percentage of the entire image, are captured in the sparse matrix and may, in various embodiments, be further processed for defect detection. An example of such additional processing done on image data in the sparse matrix may include statistical techniques such as polynomial fitting, blob extraction and size filtering, and morphological filtering and the like to detect non-smooth edges, to filter out small regions and sporadic pixels etc.

In various embodiments, a feature based approach for extracting features, such as, corner-like features and intensity gradient features, to determine any common features between images 434 may be utilized. In various embodiments, an image based approach may be utilized where the entire image is used when comparing a current image with prior images 434. In various embodiments, a combination of feature based and image based approaches, or other commonly employed technique for aligning and comparing the current and the prior images 434 may be employed as well.

Techniques like SURF (Speeded Up Robust Features), SIFT (Scale Invariant Feature Transform), or ASIFT (Affine SIFT) may be employed for feature correspondence extraction or techniques, such as, FFT (Fast Fourier Transform) and NCC (Normalized Cross Co-relation) may be employed for image based comparison. All the aforementioned techniques are well known in the art and, accordingly, for conciseness of expression, they have not been described here. Notwithstanding in the present disclosure, only the SURF, SIFT, ASIFT, FFT, and NCC techniques for image comparison have been mentioned, in at least various embodiments, other types of techniques that are commonly employed for comparing images 434 or for detecting differences or defects in images 434 may be used.

The automated defect detection analysis performed by the processing unit 14 may also implement a classifier that confirms and verifies potential defects as either defects or non-defects. Defects identified through automatic detection may include, but are not limited to, types of defects such as leading edge defects, erosions, nicks, dents, cracks or cuts, the location of the defects, the size of the defects and other defect parameters.

In various embodiments, as illustrated in FIG. 2A, where the fiducial mark has already been deposited, feature extraction may include detection of the fiducial mark.

In various embodiments as illustrated in FIG. 2B, the process proceeds to step 107, in which a fiducial mark is applied via deposition device 40. The fiducial mark may be applied to a blade 8 in response to a defect being detected.

As illustrated in FIG. 2A and FIG. 2B, the position of each blade 8 in the engine 4 or engine stage 6 may be indexed in step 108. In various embodiments, a reference blade 36 is selected from the plurality of blades 8. The selection of the reference blade 36 may be done by the processing unit 14 or may be selected by a user of the system 2 and input via the input unit 22 into the processing unit 14 for use in indexing. The position of reference blade 36 is retained in storage medium 20 during the subsequent movement of blades 8 by continuously counting subsequent blades 8 and their direction of motion as they are seen by the image capture device 10. The reference blade 36 may be the blade having been marked with the fiducial mark.

In various embodiments, with reference to FIG. 2A, a fiducial mark is deposited onto a blade 8 to mark said blade 8 as the reference blade 36. The location of each blade 8 may be indexed in the engine stage 6 according to its relative position to the reference blade 36. This relative position may be determined by the processing unit 14 by analysis of the set 432 of images 434 received from the image capture device 10 to determine the number of blades 8, away from the specific blade 8 to be indexed, is from the reference blade 36. In various embodiments, the relative position of the blade to be indexed from the reference blade 36 may be determined by analysis of the images 434 captured by the image capture device 10 while the blade 8 moves or rotates in the engine 4.

In various embodiments, with reference to FIG. 2B, the location of each blade 8 within the engine stage 6 may be indexed by each blade's 8 unique appearance. The processing unit 14 determines each blade's 8 unique appearance by analysis of the images 434 received from the image capture device 10. The processing unit 14 may utilize two dimensional images 434 or three-dimensional images 434. The three-dimensional images 434 may be synthesized from successive 2D images 434 captured while the blade 8 moves or rotates in the engine 4 or may be a depth map from a 3D sensor. Such a 3D sensor can be operable in the electromagnetic or acoustic spectrum capable of producing a depth map (which are also known as a point cloud and in this context are called an image only by analogy to 2D images). Various depth sensing sensor technologies and devices include, but are not limited to, structured light measurement, phase shift measurement, time of flight measurement, a stereo triangulation device, a sheet of light triangulation device, light field cameras, coded aperture cameras, focal stack cameras, computational imaging techniques, simultaneous localization and mapping (SLAM), imaging radar, imaging sonar, echolocation, laser radar (LIDAR), scanning LIDAR, flash LIDAR, or a combination comprising at least one of the foregoing. Different technologies can include active (transmitting and receiving a signal) or passive (only receiving a signal) and may operate in a band of the electromagnetic or acoustic spectrum such as visual, infrared, ultrasonic, etc.

The unique appearance of a blade includes one or more of its visual appearance, 2D or 3D shape, defects (regardless of size or operational significance), color, etc. After determining each blade's 8 unique appearances a fiducial mark may be applied to a blade 8 in response to damage being detected on the blade 8. In various embodiments, the fiducial mark may be applied to one blade 8. In various embodiments, the fiducial mark may be applied to a plurality of blades 8. For example, each damaged blade may receive a fiducial mark. The fiducial mark may number each damaged blade by, for example, numbering each blade using reference numerals. In various embodiments, only one blade 8 may receive the fiducial mark to create a reference blade 36 and each successive blade may be indexed relative to the reference blade 36. For example, fiducial mark 425 may be applied to blade 408.

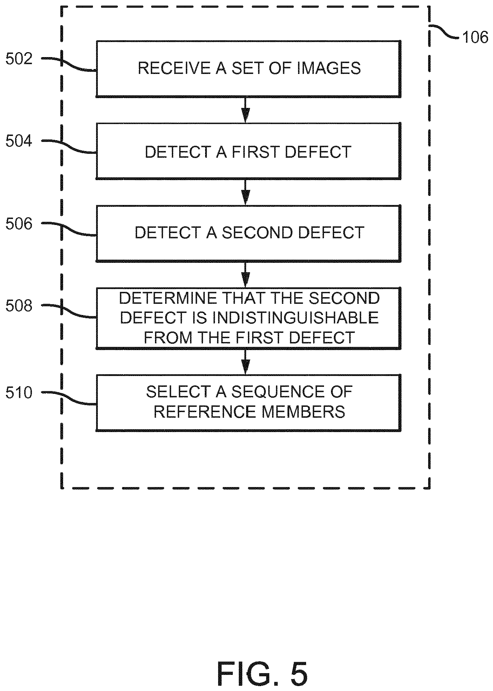

In various embodiments, where the blades 8 are highly similar, the blades may be indexed by their offset from a sequence of reference blades 436. For example, with reference to FIG. 1 and FIG. 4, a first blade 401 may be very similar to second blade 402 such that processing unit 14 cannot definitively define a difference between the two blades using their respective images. In this regard, with reference to FIG. 5, step 106 may comprise additional sub steps 502, 504, 506, 508, and 510. Sub step 502 may include receiving a set of images. Sub step 504 may include detecting a first defect. Sub step 506 may include detecting a second defect. Sub step 508 may include determining that the second defect is indistinguishable from the first defect. Sub step 506 may include selecting a sequence of reference members.

In this regard, with combined reference to FIG. 1, FIG. 4, and FIG. 5, sub step 502 may include receiving, by processing unit 14, set 432 of images 434. Sub step 504 may include detecting, by processing unit 14, a first defect (illustrated by lines 440) in first blade 401. The first defect 440 may be detected via any of the feature/defect detection methods described herein or known in the art. Sub step 506 may include detecting, by processing unit 14, a second defect (illustrated by lines 442) in second blade 402. The second blade 402 may be in sequence with the first blade 401. The second defect 442 may be detected via any of the feature/defect detection methods described herein or known in the art. Sub step 508 may include determining, by processing unit 14, that the second defect 442 is indistinguishable from the first defect 440. Sub step 510 may include selecting a sequence of reference blades 436 (i.e., first blade 401 and second blade 402) from the plurality of blades (i.e., blades 8). Although illustrated as comprising two blades, the sequence of reference blades 436 may comprise any number of damaged blades with any number of undamaged intervening blades. The sequence of reference blades 436 may then be utilized similar to reference blade 36. In various embodiments, a fiducial mark may be applied to at least one of the blades in sequence of reference blades 436. For example, a first fiducial mark 421 may be applied to first blade 401 and a second fiducial mark 422 may be applied to second blade 402.

In various embodiments, a fiducial mark may be configured to remain on blades 8 until the next inspection period. In this regard, a fiducial mark may aide in inspection of similar blades over successive inspection periods. Stated another way, a fiducial mark may allow system 2 to index the blades 8 in the same manner each inspection period. In this regard, a time-series of data regarding each blade position may be generated. Indexing the blades 8 in the same manner each inspection period may allow for a user to accurately determine parameters such as wear/damage rate and wear/damage locations. In this regard, the feature detection process may include detecting an existing fiducial mark.

With reference again to FIG. 2A and FIG. 2B, in step 110 the user may be provided with the option whether to investigate detected defects further. In some embodiments, the user may choose to dismiss further investigation, in which case the process to step 118 and ends. In various embodiments, the user may choose to investigate the defects further.

If the user chooses to investigate the defects further, the process, in various embodiments, proceeds to step 112. In step 112, the processing unit 14 transmits to a turning tool 26 instructions to move the defective blade 8 to an inspection position 38. In various embodiments the turning tool 26 may be a motor. The turning tool 26 may be coupled, directly or indirectly, to the engine 4 or engine stage 6. The turning tool 26 may be configured to move or rotate the defective blade 8 from its current position to an inspection position 38 based on the instructions transmitted to the turning tool 26 by the processing unit 14.

After receiving the instructions from the processing unit 14, the turning tool 26 moves the defective blade 8 from its current position to the inspection position 38 where the blade 8 can undergo further inspection and analysis by a user.

In various embodiments, the process may proceed from step 110 to step 114, where the processing unit 14 may transmit or provide directions or guidance for locating the defective blade 8 in its current position and/ or moving the defective blade 8 to an inspection position 38 without the assistance of the automated turning tool 26. The directions or guidance may be written, pictorial, auditory or a combination of some or all the aforementioned. For example, in various embodiments, the output unit 18 may display written directions advising a user to turn or rotate the engine stage a certain amount, to stop at a certain point, and the like. In various embodiments, the output unit 18 may display a map of the engine 4 and may identify on the map the location of the defective blade 8. In yet another embodiment, the processing unit 14 may provide auditory directions for locating and/ or moving the defective blade 8 to an inspection position 38. Such auditory directions may include, but are not limited to, auditory spoken instructions, alarms, or beeps to guide the user.

Once a defective blade 8 is located and moved from its current position to the inspection position 38 in step 116, the process may proceed back to step 110 until all defective blades have been moved to an inspection position 38 for inspection or the user selects an option via the input unit 22 to discontinue or delay the inspection. At the point that there are no more defective blades 8 to inspect or the user selects to discontinue or delay inspection, the process ends at step 118.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it may be within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element is intended to invoke 35 U.S.C. 112(f) unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method of performing position control on members of a device, the method comprising:
Applying (103), by a deposition device (40; 340), a fiducial mark to a first member of the device; and
receiving, by a processing unit (14), from an image capture device (10; 310) coupled to the processing unit (14), an image (434) of the first member.

2. The method of claim 1, further comprising detecting, by the processing unit (14), the fiducial mark on the first member.

3. The method of claim 2, further comprising transmitting (112), by the processing unit (14), instructions to a turning tool (26) to move the first member to an inspection position in the device.

4. The method of any preceding claim, further comprising:
detecting, by the processing unit (14), a defect in a second member; and
transmitting (112), by the processing unit (14), instructions to a turning tool (26) to move the second member to an inspection position in the device.

5. The method of claim 4, wherein the applying (103) the fiducial mark is in response to the detecting the defect.

6. The method of any preceding claim, wherein the applying (103) is performed via the deposition device (40; 340), the deposition device (40; 340) being coupled near a tip of the image capture device (10; 310).

7. The method of claim 2, further comprising selecting, by the processing unit (14), the first member to be a reference member, wherein the selecting is in response to the detecting the fiducial mark.

8. The method of claim 4 or 5, further comprising indexing a location of the second member relative to the first member.

9. The method of any preceding claim, wherein the device comprises an aircraft engine (4; 304) and the first member comprises a blade (8; 308).

10. A defect detection and position control system comprising:
a processing unit (14);
a deposition device (40; 340) in communication with the processing unit (14), the deposition device (40; 340) configured to deposit a fiducial mark onto a member of a device; and
an image capture device (10; 310) in communication with the processing unit (14), the image capture device (10; 310) configured to send an image of the member to the processing unit (14).

11. The system of claim 10, wherein the deposition device (40; 340) is attached to the image capture device (10; 310), and/or
wherein optionally the depositing the fiducial mark and the sending the image is simultaneous, and/or
wherein optionally the processing unit (14) is configured to detect the fiducial mark, and/or
wherein optionally the deposition device (40; 340) is configured to deposit the fiducial mark onto the member in response to the processing unit (14) detecting a defect on the member.

12. The system of claim 10 or 11, wherein the processing unit (14) includes a non-transitory computer readable medium having instructions stored thereon that, in response to execution by the processing unit (14), cause the processing unit to perform operations comprising:
receiving (502), by the processing unit (14), from the image capture device (10; 310) a first image of a first member of the device;
receiving (502), by the processing unit (14), from the image capture device (10; 310) a second image of a second member of the device;
detecting (504), by the processing unit (14), a first defect in the first member;
detecting (506), by the processing unit (14), a second defect in the second member, the second member being in sequence with the first member;
determining (508), by the processing unit (14), that the second defect is indistinguishable from the first defect; and
selecting (510), by the processing unit (14), a sequence of reference members comprising at least the first member and the second member, and/or
wherein optionally the device comprises an aircraft engine (4; 304) and the member comprises a blade (8; 308).

13. A method of performing position control comprising:
receiving (502), by a processing unit (14), from an image capture device (10; 310) in electronic communication with the processing unit (14), an image of a first member inside of a device;
receiving (502), by the processing unit (14), from the image capture device (10; 310) an image of a second member inside of the device;
detecting (504), by the processing unit (14), a first defect in the first member;
detecting (506), by the processing unit (14), a second defect in the second member;
determining (508), by the processing unit (14), that the second defect is indistinguishable from the first defect; and
selecting (510), by the processing unit (14), a sequence of reference members comprising at least the first member and the second member.

14. The method of claim 13, further comprising indexing a location of each of a plurality of members within the device relative to the sequence of reference members.

15. The method of claim 14, further comprising:
detecting, by the processing unit (14), a defect in a third member of the plurality of members, and/or
wherein optionally the plurality of members comprise a plurality of blades (8; 308) and the device comprises an aircraft engine (4; 304).
